# EUROPEAN PATENT SPECIFICATION

(11) **EP 2 366 243 B1**
(45) Date of publication and mention of the grant of the patent: **17.07.2019**
(21) Application number: 09799251.5
(22) Date of filing: 11.12.2009
(51) Int. Cl.: H04L 29/08, H04L 29/06, G06F 16/9535

(54) **METHOD AND SYSTEM FOR SUPPORTING THE GENERATION OF ACCESS CONTROL PREFERENCES AND/OR PRIVACY PREFERENCES FOR USERS IN A PERVASIVE ENVIRONMENT**
VERFAHREN UND SYSTEM ZUR UNTERSTÜTZUNG DER ERZEUGUNG VON ZUGANGSKONTROLLPRÄFERENZEN UND/ODER PRIVATSPHÄRENPRÄFERENZEN FÜR BENUTZER IN EINER DURCHDRINGENDEN UMGEBUNG
PROCÉDÉ ET SYSTÈME PERMETTANT LA GÉNÉRATION DES PRÉFÉRENCES DE GESTION DES ACCÈS ET/OU DES PRÉFÉRENCES DE CONFIDENTIALITÉ POUR DES UTILISATEURS DANS UN ENVIRONNEMENT D'INFORMATIQUE OMNIPRÉSENTE

(30) Priority: 12.12.2008 EP 08021610
(43) Date of publication of application: 21.09.2011
(73) Proprietor: NEC Corporation, Tokyo 108-8001 (JP)
(72) Inventor: PASHALIDIS, Andreas, B-3001 Leuven-Heverlee (BE); LANGE, Brigitta, 71665 Vaihingen/Enz (DE)
(74) Representative: Patent- und Rechtsanwälte Ullrich & Naumann
(86) International application number: PCT/EP2009/008894
(87) International publication number: WO 2010/066453

(56) References cited:
- WO-A2-2007/141611
- Scott Lederer, Anind K. Dey, Jennifer Mankoff: "A Conceptual Model and a Metaphor of Everyday Privacyin Ubiquitous Computing Environments" Computer Science Division (EECS), University of CaliforniaBerkeley, California 94720 no. Report No. UCB/CSD-2-1188, June 2002 (2002-06), XP002586081 Retrieved from the Internet: URL:http://www.cs.cmu.edu/~io/publications /old-pubs/privacy-techreport02.pdf> [retrieved on 2010-06-08]
- NI (JENNY) ZHANG ET AL: "A Privacy Agent in Context-Aware Ubiquitous Computing Environments" 1 January 2006 (2006-01-01), COMMUNICATIONS AND MULTIMEDIA SECURITY LECTURE NOTES IN COMPUTER SCIENCE;;LNCS, SPRINGER, BERLIN, DE, PAGE(S) 196 - 205 , XP019047492 ISBN: 9783540478201 paragraphs [0001], [0002], [0004]; figure 5
- DAVY PREUVENEERS ET AL: "Context-Driven Prevention of Unintended Identity Disclosure", , 1 May 2006 (2006-05-01), XP055110017, Retrieved from the Internet: URL:http://loms-itea.org/publications/ptia i06.pdf [retrieved on 2014-03-26]

## Description

The present invention relates to a method for supporting the generation of access control preferences and/or privacy preferences for users in a pervasive service environment, wherein an automated user information management system stores and/or manages personal information items owned by and/or associated to a user, wherein an access control system is provided for processing requests from a pervasive service and/or application that query a set of said user-specific information items being stored in and/or managed by said user information management system.

Furthermore, the invention relates to a system for supporting the generation of access control preferences and/or privacy preferences for users in a pervasive service environment, the system comprising at least one pervasive service and/or application being configured to request user-specific information items, an automated user information management system being configured to store and/or manage personal information items owned by and/or associated to a user, an access control system associated to said user information management system, said access control system being configured to process the requests from said pervasive service and/or application, and a population of users taking part in said pervasive service environment.

In the field of pervasive service environments, pervasive systems adjust the manner in which they provide their services according to the preferences and the behavior of their users. Usually, this adjustment requires the processing of a large amount of personal information about the user, for example current activities. This personal data may be stored in a distributed fashion. Moreover, it may be accessed by different systems and/or services, and it may be exchanged across multiple domains.

Generally, users want to protect their privacy, i.e. they want to prevent pervasive service providers from being able to obtain access to their entire personal information, in particular when this personal information includes privacy sensitive items such as activities, location and personal attributes. On the one hand the pervasive services will need certain personal information in order to provide their services properly. However, they typically will not require the full information. For instance, a video rental service might need to know, whether his client is above 18, but the service does not necessarily need to know the birthday or name of the person. So the interest of the users is to control or minimize the amount of their personal information that is passed to the service. Therefore, an access control mechanism is required that allows the user to govern the type and amount of personal information that is released to pervasive service providers.

Exemplary it is referred to the Paper *"*C.A. Ardagna et al., "Location Privacy Protection Through Obfuscation-Based Techniques", Lecture Notes in Computer Science, data and Applications Security XXI, Springer Berlin/Heidelberg, 2007, p. 47-60, describing a way to express user privacy preferences on location information. Based on such location preferences and based on obfuscation techniques the paper discusses an idea which permits to achieve, and quantitatively estimate through a metric, different degrees of location privacy. The proposed method requires the user to explicitly/manually specify his access control preferences or obfuscation levels. The initialization is done by some static default policies defined once by a pervasive service or application. The method considers no balance between privacy protection and usability aspects regarding the user's point of view and, hence, proves to be disadvantageous in terms of user friendliness.

The non-patent literature Davy Preuveneers et al.: "Context-Driven Prevention of Unintended Identity Disclosure", May 1, 2006, XP055110017*,* describes a framework that uses context information to selectively disclose personal information to service providers while keeping the human-computer interaction non-intrusive. According to this document, privacy preferences are required to define and analyse context-constraints. The document assumes that such context-constrained or context-aware privacy preferences of an individual user already exist and that they are stored within a user's profile (Identity).

It is therefore an object of the present invention to improve and further develop a method and a system of the initially described type for supporting the generation of access control and/or privacy preferences for users in a pervasive service environment in such a way that an ease of use for the user is achieved, wherein both user privacy protection and usability level of the pervasive system are considered.

In accordance with the invention, the aforementioned object is accomplished by a method comprising the features of claim 1. According to this claim such a method is characterized in that an entity - feedback collector - is provided, said feedback collector performing the steps of
collecting individual access control and/or privacy preferences from a plurality of users of said pervasive service environment,
deriving a popular rule set of access control and/or privacy preferences from said collected individual access control and/or privacy preferences of said plurality of users, wherein said popular rule set may serve as initial privacy preferences of users being new to said pervasive service environment, and
providing said popular rule set of access control and/or privacy preferences to users of said pervasive service environment such that an established user of said pervasive service environment and/or a new user joining said pervasive service environment adopts said popular rule set as its own privacy preferences.

Furthermore, the aforementioned object is accomplished by a system comprising the features of claim 14. According to this claim such a system is characterized in that an entity - feedback collector - is provided, said feedback collector being configured
to collect individual access control and/or privacy preferences from a plurality of users of said pervasive service environment,
to derive a popular rule set of access control and/or privacy preferences from said collected individual access control and/or privacy preferences of said plurality of users, wherein said popular rule set may serve as initial privacy preferences of users being new to said pervasive service environment, and
to provide said popular rule set of access control and/or privacy preferences to users of said pervasive service environment such that an established user of said pervasive service environment and/or a new user joining said pervasive service environment adopts said popular rule set as its own privacy preferences.

According to the invention it has first been recognized that in the context of supporting the generation of access control/privacy preferences for users in a pervasive service environment an acceptable balance between the degree of user privacy protection and the usability level of the pervasive system can be achieved by using community and cumulative knowledge. Further, it has been recognized that this community and cumulative knowledge can be obtained by employing an entity - feedback collector -, the feedback collector being configured to collect individual access control/privacy preferences from a plurality of users. According to the invention the feedback collector is configured to derive a popular rule set of access control/privacy preferences from said collected individual access control/privacy preferences. Thereupon the feedback collector provides the popular rule set of access control/privacy preferences to users of the pervasive service environment. Thus, the user is not overwhelmed by manually configuring all the rules for access control to his context information. Both established users of the pervasive service environment and new users joining this pervasive service environment can apply the popular rule set for their personal information access control in the pervasive system including an automated user information management system.

The user information management system and the access control system can be distributed systems. Alternatively, the user information management system may include the access control system, in particular in form of a subsystem. The access control system may be invoked each time a pervasive service or application queries a set of user-specific information items that are stored in and/or managed by the user information management system. As a result, the deployment of the feedback collector involves an ease of use for pervasive systems and facilitates an acceptable balance between privacy protection and usability.

As what regards the kind of the privacy preference storage and user information management system being under consideration, the present invention does not imply any restrictions. The user information management system may be, for example, but not limited to, a context management system. Furthermore, the user information management system may be centralized or distributed. The same applies for the access control system. It is noted that the method and the system may be applied to all kinds of information or data base management systems, which store user-specific data, even if they do not store preferences, attributes and location, and even if this data is not owned by the user, under any definition of ownership.

In a preferred embodiment a decision regarding the release of a queried set of the user-specific information items to the pervasive service and/or application may be taken on the basis of the access control and/or privacy preferences of the associated user. Thereby the access control system may decide whether or not the queried set of information items are released to the service. The access control system may also decide that only a specific subset of the queried set may be released to the querying service or application. In this case, only this subset of informational items is released to the pervasive service. This decision is based on user-specific access control and privacy preferences stored at some place the access control system of the user information management system is allowed to access and read.

With regard to flexibility and scalability, the access control/privacy preferences may be distributed over multiple parties. Generally, the access control/privacy preferences of a user may be stored either locally at the user information management system, or at a device of the user, or at some other domain trusted by the user.

With respect to reliability aspects, the feedback collector is a service which may be part of the pervasive service environment. Further, it may be provided that the feedback collector and the information management system constitute a corporate single entity.

Alternatively, the feedback collector is a service which may be located within a different domain than the pervasive service, e.g. the feedback collector may be operated as a 3^{rd} party service.

According to a preferred embodiment, the feedback collector includes an interpreter, the interpreter being configured to translate the individual access control/privacy preferences into a common format compliant with the preference specification of the user information management system. Additionally or alternatively, the feedback collector may use for the preference specification some standard formats, e.g. XACML, P3P, etc.

Furthermore, the feedback collector may process the collected access control/privacy preferences in such a way as to extract privacy rules for individual information data types. Such a privacy rule can be regarded as a kind of disclosure preference for a information data type that is managed by the user information system specifying to what degree user-specific information is disclosed to a requesting service. In a further step the privacy rules may be analyzed in such a way that preference statistics are generated, wherein the preference statistics may be used for deriving and/or composing the popular rule set - for example the most common rules applied by the community of users - for all data types.

Advantageously, it may be provided that multiple popular rule sets are derived. According to this, by using the collected feedback of the community of pervasive service environment users, the feedback collector may derive one or more privacy preferences - popular rule sets - that in each case reflect a large proportion of the population of users.

With respect to serviceability and operability, the feedback collector may provide interfaces to users of the pervasive service environment for displaying and/or selecting the popular rule set. More specifically, popular rule sets for all or a part of the data types processed by the user information management system may be displayed and/or selected.

With respect to safety and security, the access control/privacy preferences collected by the feedback collector may be anonymized. Accordingly, the feedback collector may provide methods and interfaces for accessing and storing the individual privacy preference specifications of the community of pervasive service environment users, where the privacy preferences are anonymized.

With regard to an improved usability, based on the popular rule set, a user of the pervasive service environment may perform user-specific changes and/or modifications of his own access control/privacy preferences. These user-specific changes and/or modifications may be performed in incremental steps.

In a further step, the feedback collector may consider the user-specific changes and/or modifications. Thus, the user specific adapted privacy preferences may be again input to the feedback collector. The participation in the community feedback system might be optional.

In a preferred embodiment, the feedback collector may be equipped with a functionality for notifying users of the pervasive service environment about major updates, changes and/or modifications of the popular rule set.

Advantageously, it may be provided that a new user joining the pervasive service environment may employ and/or adopt the popular rule set for the process of initializing his own access control and/or privacy preferences. Consequently, the popular rule set may be used to simplify the process of initializing the privacy settings of new users that join the pervasive service environment.

With respect to the recomputing/updating of the popular rule set, it is not necessary to recompute the popular rule set every time a new user joins the population. It may be adequate that the popular rule set is periodically recomputed, e.g. in some fixed time intervals.

Additionally or alternatively, the popular rule set may be event-drivenly recomposed or recomputed, for example, but not limited to, each time the population of users has significantly increased or on demand by a user or a certain number of users.

Additionally, it may be provided an opportunity for an additional revenue stream for the feedback collector by virtue of being able to "manipulate" the popular rule set by favorably treating paying service providers.

There are several ways how to design and further develop the teaching of the present invention in an advantageous way. To this end, it is to be referred to the patent claims subordinate to patent claim 1 and to the following explanation of preferred examples of embodiments of the invention, illustrated by the figures. In connection with the explanation of the preferred examples of embodiments of the invention by the aid of the figures, generally preferred embodiments and further developments of the teaching will be explained. In the drawings
- Fig. 1: is a schematic overview of an example of an application scenario of a method or system according to the present invention illustrating the initialization process of a user's access control/privacy preferences,
- Fig. 2: is a schematic overview of another embodiment of a method or system according to the present invention illustrating the process of adapting access control/privacy preferences, and
- Fig. 3: is a schematic overview illustrating the access control complexity regarding context information in pervasive service environments.

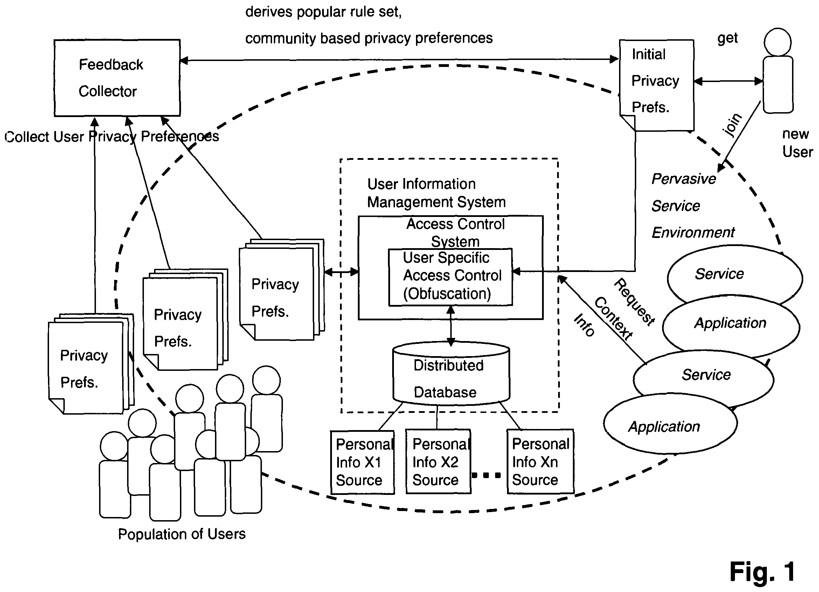

Fig. 1 shows a schematic overview illustrating an application scenario in the context of a pervasive service environment (PSE). The PSE comprises pervasive services and applications being configured to request user-specific information items - e.g. preferences, attributes and location - stored and managed by a user information management system (UIMS). In the illustrated embodiment the process of a new user joining the PSE is depicted. The UIMS controls the access to the users' personal information by means of user-specific access control/privacy preferences. The new user does not need to configure his access control/privacy preferences manually but automatically gets an initial privacy preference derived from a popular rule set generated by a feedback collector. The feedback collector periodically collects the privacy preferences of the entire population of users - or at least a large part of the population - and analyzes the preferences in order to derive popular rule sets, which serve as initial privacy preferences of users being new to the PSE.

As a result, the popular rule derived by the feedback collector is used to simplify the process of initializing the privacy settings of a new user joining the PSE. Instead of undergoing the tedious process of specifying the access control preferences for information items processed by the PSE manually, the users can chose to adopt the popular rule set, i.e. the "average" privacy settings of the community of PSE users as their own initial privacy preferences. This saves time and effort, which is especially helpful in scenarios where the user is restricted to mobile devices and small displays. Also, non-expert users could benefit from the evolved privacy experience of the community of users, which is assumed to meet the individual privacy and usability requirements to a degree that is more accurate than any other default privacy policy, like the typical "all-or-nothing" access control policies which may lead to an unacceptably negative impact on usability.

Furthermore, the embodiment illustrated in Fig. 1 shows that in case a new user is joining the population - i.e. the PSE - the popular rule set provided by the feedback collector is installed in the UIMS access control system that is responsible for this user's data. If multiple popular rule sets are available, a particular one is chosen. It is not necessary that the same popular rule set is installed as the initial rule set for every new user. It is also not necessary to recompute a popular rule set every time a new user joins the population. It is sufficient that popular rule sets are event-drivenly and/or periodically recomputed, for example whenever the population has significantly increased, or on demand by a user or a certain number of users, or in some fixed time intervals.

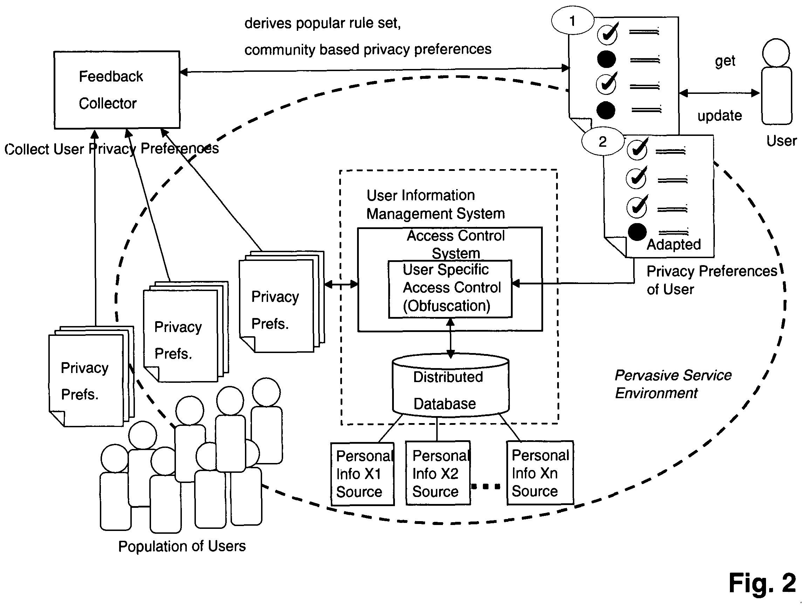

Fig. 2 illustrates an exemplary embodiment of the process of adapting the access control/privacy preferences (1) - derived from the popular rule set - to specific user needs by changing only part of the personal information access control preferences that do not meet the individual privacy requirements of the user. After the initialization of the privacy preferences by employing the popular rule set, the user derives his individual rule set by modification of individual rules in such a way that they match the own privacy and usability needs. It is assumed that modification or updating of privacy preferences based on the popular rule set involves only incremental steps, and hence is less configuration effort for the user as compared to a specification of privacy preferences from scratch. Thus the user is in control of his privacy settings for the PSE and has considerable ease-of-use and assistance through the community based privacy preference initialization. The UIMS will use the adapted privacy preferences (2) for controlling the access to the user's personal information.

The user specific adapted privacy preferences are again input to the feedback collector. Participation in the community feedback system might be optional, although it should be understood that the more users participating in the privacy preference feedback mechanism, the more valuable the output, i.e. the popular rule set will be.

The feedback collector may record changes in the popular rule sets over time. Such changes may occur, due to increase in user population, or other changes in the user community (e.g. major shift in average age or user group); due to changes in pervasive service environments, e.g. new services, or change of service conditions, loss of reputation; or due to the introduction of new data types managed by the UIMS, etc. In case a change in the popular rule set has occurred the feedback collector can automatically notify the users of the PSE that the community based privacy preferences have changed and differ from the users' individual privacy settings. Thereupon, the users have the option to adopt these changes for their own privacy rules.

By the notification service of the feedback collector the user might profit from the inherent community knowledge concerning privacy issues and gets some indication or assistance in probably necessary or recommended access control and privacy specification updates. Assumed a service of the PSE has lost its reputation because of some incidents where it has transferred private user data to 3^{rd} party commercial services without authorization. The users involved might have changed their privacy preferences as a result of this. Since the changed privacy preferences are input to the feedback collector this may lead to a change in the popular rule set. And by the notification other users of the PSE will be informed that the community restricts the access of this service to their private data and might want to change their own privacy settings accordingly.

The user might want to get periodical updates on significant changes in popular rule sets as a kind of dynamic privacy regulation indicator or compare the current rule set with popular one to learn from deviations.

As an example the UIMS may store the following types of user-specific data: current location, favorite color, and monthly income. A user-specific rule set for this UIMS tells the access control system to which degree of granularity each of these data types should be released to a pervasive service. The following is a very simple example of such a rule set.

| **Data type** | **Rule** |
|---|---|
| Current location: | release only with city-level granularity |
| Favorite color: | Release |
| Income: | Do not release |

The feedback collector has collected the rule sets of a population of users. A simple method to derive a popular rule set is by the following algorithm:
For a given data type, select the rule that occurs in most rule sets of the population of existing users. In case of a tie, randomly select one of the candidate rules. Set the selected rule as the rule for this data type in the popular rule set. Repeat this process for all data types in the UIMS.

The effectiveness of this invention is based on the fact that a population of users will - over time - adopt access control rules that strike an acceptable balance between privacy and usability. The privacy of the user is protected by aligning his own rule set to the rule set of a large population and therefore ensuring that the user is not "significantly worse off" than a significant number of other users in the PSE and that the community preferences evolve the acceptable balance between user privacy protection and usability level of the PSE.

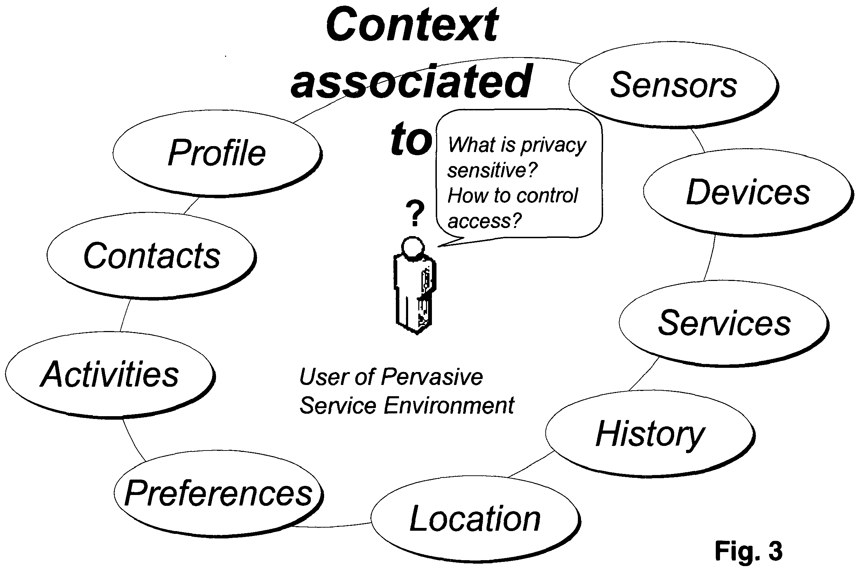

To conclude, Fig. 3 shows a schematic overview generally illustrating the access control complexity regarding context information in PSEs. There are typically overwhelmingly many places and factors within PSEs that contain/collect privacy sensitive information associated to a user of a PSE like Sensors, Devices, Services, History, Location, Preferences, Activities, Contacts and Profile that all need to be governed by appropriate access rules and settings in order to protect the users' privacy.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for supporting the generation of access control preferences and/or privacy preferences for users in a pervasive service environment,
wherein an automated user information management system manages personal information items owned by and/or associated to a user,
wherein an access control system is provided for processing requests from a pervasive service and/or application that query a set of said user-specific information items being managed by said user information management system,
**characterized in that** an entity - feedback collector - is provided, said feedback collector performing the steps of
collecting individual access control and/or privacy preferences from a plurality of users of said pervasive service environment,
deriving a popular rule set of access control and/or privacy preferences from said collected individual access control and/or privacy preferences of said plurality of users, wherein said popular rule set may serve as initial privacy preferences of users being new to said pervasive service environment, and
providing said popular rule set of access control and/or privacy preferences to users of said pervasive service environment such that an established user of said pervasive service environment and/or a new user joining said pervasive service environment adopts said popular rule set as its own privacy preferences.

2. Method according to claim 1, wherein a decision regarding the release of a queried set of said user-specific information items to said pervasive service and/or application is taken on the basis of said access control and/or privacy preferences of said associated user.

3. Method according to claim 1 or 2, wherein said access control and/or privacy preferences are distributed over multiple parties.

4. Method according to any of claims 1 to 3, wherein said feedback collector is a service, said service being part of said pervasive service environment.

5. Method according to any of claims 1 to 4, wherein said feedback collector and said user information management system constitute a corporate single entity.

6. Method according to any of claims 1 to 5, wherein said feedback collector is a service, said service being located within a different domain than said pervasive service environment.

7. Method according to any of claims 1 to 6, wherein said feedback collector includes an interpreter which translates said individual access control and/or privacy preferences into a format compliant with the preference specification format of said user information management system.

8. Method according to any of claims 1 to 7, wherein said feedback collector processes said collected access control and/or privacy preferences in such a way as to extract privacy rules for individual information data types managed by said user information management system,
wherein said privacy rules are analyzed in such a way that preference statistics are generated, wherein said preference statistics are used for deriving said popular rule set for all data types.

9. Method according to any of claims 1 to 8, wherein multiple popular rule sets are derived.

10. Method according to any of claims 1 to 9, wherein said feedback collector provides interfaces to users of said pervasive service environment for displaying and/or selecting said popular rule set.

11. Method according to any of claims 1 to 10, wherein said access control and/or privacy preferences collected by said feedback collector are anonymized.

12. Method according to any of claims 1 to 11, wherein, based on said popular rule set, a user of said pervasive service environment performs user-specific modifications of his own access control and/or privacy preferences, wherein said feedback collector considers said user-specific modifications.

13. Method according to any of claims 1 to 12, wherein said feedback collector notifies users of said pervasive service environment about updates and/or modifications of said popular rule set, and/or
wherein a new user joining said pervasive service environment employs said popular rule set for the process of initializing his own access control and/or privacy preferences, and/or
wherein said popular rule set is periodically and/or event-drivenly recomposed.

14. System for supporting the generation of access control preferences and/or privacy preferences for users in a pervasive service environment, in particular for the execution of the method according to any of claims 1 to 13, the system comprising
the functionality of providing at least one pervasive service and/or application being configured to request user-specific information items,
an automated user information management system being configured to manage personal information items owned by and/or associated to a user,
an access control system associated to said user information management system, said access control system being configured to process the requests from said pervasive service and/or application, and
the functionality of including a population of users taking part in said pervasive service environment,
**characterized in that** an entity - feedback collector - is provided, said feedback collector being configured
to collect individual access control and/or privacy preferences from a plurality of users of said pervasive service environment,
to derive a popular rule set of access control and/or privacy preferences from said collected individual access control and/or privacy preferences of said plurality of users, wherein said popular rule set may serve as initial privacy preferences of users being new to said pervasive service environment, and
to provide said popular rule set of access control and/or privacy preferences to users of said pervasive service environment such that an established user of said pervasive service environment and/or a new user joining said pervasive service environment adopts said popular rule set as its own privacy preferences.

## Patentansprüche

1. Verfahren zur Unterstützung der Erzeugung von Zugangskontrolleinstellungen und/oder Datenschutzeinstellungen für Benutzer in einer pervasiven Service-Umgebung,
wobei ein automatisiertes Benutzerinformationsmanagementsystem personenbezogene Informationselemente, die einem Benutzer gehören und/oder ihm zugeordnet sind, verwaltet,
wobei ein Zugangskontrollsystem zum Verarbeiten von Anfragen von einem pervasiven Service und/oder Anwendung vorgesehen ist, der/die einen Satz der benutzerspezifischen Informationselemente abfragt, die von dem Benutzerinformationsmanagementsystem verwaltet werden,
**dadurch gekennzeichnet, dass** eine Entität - ein Feedback-Sammler - vorgesehen ist, wobei der Feedback-Sammler die Schritte des
Sammelns individueller Zugangskontroll- und/oder Datenschutzeinstellungen von einer Vielzahl von Benutzern der pervasiven Service-Umgebung,
Ableitens eines populären Regelsatzes von Zugangskontroll- und/oder Datenschutzeinstellungen aus den gesammelten individuellen Zugangskontroll- und/oder Datenschutzeinstellungen der Vielzahl von Benutzern, wobei der populäre Regelsatz als initiale Datenschutzeinstellungen für Benutzer dienen kann, die neu in der pervasiven Service-Umgebung sind, und
Bereitstellens des populären Regelsatzes von Zugangskontroll- und/oder Datenschutzeinstellungen für Benutzer der pervasiven Service-Umgebung, so dass ein etablierter Benutzer der pervasiven Service-Umgebung und/oder ein neuer Benutzer, der sich der pervasiven Service-Umgebung anschließt, den populären Regelsatz als seine eigenen Datenschutzeinstellungen übernimmt,
durchführt.

2. Verfahren nach Anspruch 1, wobei eine Entscheidung über die Freigabe eines abgefragten Satzes von benutzerspezifischen Informationselementen an den pervasiven Service und/oder die pervasive Anwendung auf der Grundlage der Zugangskontroll- und/oder Datenschutzeinstellungen des zugehörigen Benutzers getroffen wird.

3. Verfahren nach Anspruch 1 oder 2, wobei die Zugangskontroll- und/oder Datenschutzeinstellungen über mehrere Parteien verteilt sind.

4. Verfahren nach einem der Ansprüche 1 bis 3, wobei der Feedback-Sammler ein Service ist, wobei der Service Teil der pervasiven Service-Umgebung ist.

5. Verfahren nach einem der Ansprüche 1 bis 4, wobei der Feedback-Sammler und das Benutzerinformationsmanagementsystem eine vereinigte einzelne Entität bilden.

6. Verfahren nach einem der Ansprüche 1 bis 5, wobei der Feedback-Sammler ein Service ist, wobei sich der Service innerhalb eines anderen Bereichs als die pervasive Service-Umgebung befindet.

7. Verfahren nach einem der Ansprüche 1 bis 6, wobei der Feedback-Sammler einen Interpreter umfasst, der die individuellen Zugangskontroll- und/oder Datenschutzeinstellungen in ein Format übersetzt, das mit dem Einstellungsspezifikationsformat des Benutzerinformationsmanagementsystems konform ist.

8. Verfahren nach einem der Ansprüche 1 bis 7, wobei der Feedback-Sammler die gesammelten Zugangskontroll- und/oder Datenschutzeinstellungen so verarbeitet, dass er Datenschutzregeln für individuelle Informationsdatentypen, die von dem Benutzerinformationsmanagementsystem verwaltet werden, extrahiert,
wobei die Datenschutzregeln so analysiert werden, dass Einstellungsstatistiken erzeugt werden, wobei die Einstellungsstatistiken zum Ableiten des populären Regelsatzes für alle Datentypen verwendet werden.

9. Verfahren nach einem der Ansprüche 1 bis 8, wobei mehrere populäre Regelsätze abgeleitet werden.

10. Verfahren nach einem der Ansprüche 1 bis 9, wobei der Feedback-Sammler Benutzern der pervasiven Service-Umgebung Schnittstellen zum Anzeigen und/oder Auswählen des populären Regelsatzes bereitstellt.

11. Verfahren nach einem der Ansprüche 1 bis 10, wobei die von dem Feedback-Sammler gesammelten Zugangskontroll- und/oder Datenschutzeinstellungen anonymisiert sind.

12. Verfahren nach einem der Ansprüche 1 bis 11, wobei ein Benutzer der pervasiven Service-Umgebung basierend auf dem populären Regelsatz benutzerspezifische Änderungen seiner eigenen Zugangskontroll- und/oder Datenschutzeinstellungen durchführt, wobei der Feedback-Sammler die benutzerspezifischen Änderungen berücksichtigt.

13. Verfahren nach einem der Ansprüche 1 bis 12, wobei der Feedback-Sammler Benutzer der pervasiven Service-Umgebung über Aktualisierungen und/oder Änderungen des populären Regelsatzes benachrichtigt, und/oder
wobei ein neuer Benutzer, der sich der pervasiven Service-Umgebung anschließt, den populären Regelsatz für den Initialisierungsprozess seiner eigenen Zugangskontroll- und/oder Datenschutzeinstellungen verwendet, und/oder
wobei der populäre Regelsatz periodisch und/oder ereignisgesteuert neu aufgebaut wird.

14. System zur Unterstützung der Erzeugung von Zugangskontrolleinstellungen und/oder Datenschutzeinstellungen für Benutzer in einer pervasiven Service-Umgebung, insbesondere zur Durchführung des Verfahrens nach einem der Ansprüche 1 bis 13, das System umfassend
die Funktionalität, mindestens einen pervasiven Service und/oder Anwendung bereitzustellen, der/die konfiguriert ist, benutzerspezifische Informationselemente anzufordern,
ein automatisiertes Benutzerinformationsmanagementsystem, das konfiguriert ist, personenbezogene Informationselemente zu verwalten, die einem Benutzer gehören und/oder ihm zugeordnet sind,
ein Zugangskontrollsystem, das dem Benutzerinformationsmanagementsystem zugeordnet ist, wobei das Zugangskontrollsystem konfiguriert ist, die Anfragen von dem pervasiven Service und/oder Anwendung zu verarbeiten, und
die Funktionalität, eine Population von Benutzern einzubeziehen, die an der pervasiven Service-Umgebung teilnehmen,
**dadurch gekennzeichnet, dass** eine Entität - ein Feedback-Sammler - vorgesehen ist, wobei der Feedback-Sammler konfiguriert ist,
individuelle Zugangskontroll- und/oder Datenschutzeinstellungen von einer Vielzahl von Benutzern der pervasiven Service-Umgebung zu sammeln,
aus den gesammelten individuellen Zugangskontroll- und/oder Datenschutzeinstellungen der Vielzahl von Benutzern einen populären Regelsatz von Zugangskontroll- und/oder Datenschutzeinstellungen abzuleiten, wobei der populäre Regelsatz als initiale Datenschutzeinstellungen von Benutzern dienen kann, die neu in der pervasiven Service-Umgebung sind, und
Benutzern der pervasiven Service-Umgebung den populären Regelsatz der Zugangskontroll- und/oder Datenschutzeinstellungen so bereitzustellen, dass ein etablierter Benutzer der pervasiven Service-Umgebung und/oder ein neuer Benutzer, der der pervasiven Service-Umgebung beitritt, den populären Regelsatz als seine eigenen Datenschutzeinstellungen übernimmt.

## Revendications

1. Procédé permettant de générer des préférences de contrôle d'accès et/ou de préférences de confidentialité pour des utilisateurs dans un environnement de service pervasif,
dans lequel un système de gestion d'informations d'utilisateur automatisé gère des éléments d'information personnels détenus par et/ou associés à un utilisateur,
dans lequel un système de contrôle d'accès est prévu pour traiter des requêtes en provenance d'un service et/ou d'une application pervasif qui interrogent un ensemble desdits éléments d'information spécifiques à l'utilisateur qui sont gérés par ledit système de gestion d'informations d'utilisateur,
**caractérisé en ce qu'**une entité -collecteur de retour- est prévue, ledit collecteur de retour effectuant les étapes consistant à
collecter des préférences individuelles de contrôle d'accès et/ou de confidentialité auprès d'une pluralité d'utilisateurs dudit environnement de service pervasif,
déduire un ensemble de règles générales de préférences de contrôle d'accès et/ou de confidentialité à partir desdites préférences individuelles de contrôle d'accès et/ou de confidentialité collectées, où ledit ensemble de règles générales peut servir de préférences de confidentialité initiales d'utilisateurs qui sont nouveaux dans ledit environnement de service pervasif, et
fournir ledit ensemble de règles générales de préférences de contrôle d'accès et/ou de confidentialité à des utilisateurs dudit environnement de service pervasif, de sorte qu'un utilisateur établi dudit environnement de service pervasif et/ou un nouvel utilisateur rejoignant ledit environnement de service pervasif adopte ledit ensemble de règles générales comme ses propres préférences de confidentialité.

2. Procédé selon la revendication 1, dans lequel une décision concernant la diffusion audit service et/ou à une application pervasif, d'un ensemble demandé desdits éléments d'information spécifiques à l'utilisateur est prise sur la base desdites préférences de contrôle d'accès et/ou de confidentialité dudit utilisateur associé.

3. Procédé selon la revendication 1 ou 2, dans lequel lesdites préférences de contrôle d'accès et/ou de confidentialité sont réparties sur de multiples parties.

4. Procédé selon l'une quelconque des revendications 1 à 3, dans lequel ledit collecteur de retour est un service, ledit service faisant partie dudit environnement de service pervasif.

5. Procédé selon l'une quelconque des revendications 1 à 4, dans lequel ledit collecteur de retour et ledit système de gestion d'informations d'utilisateur constituent une seule entité d'entreprise.

6. Procédé selon l'une quelconque des revendications 1 à 5, dans lequel ledit collecteur de retour est un service, ledit service étant situé dans un domaine différent de celui dudit environnement de service pervasif.

7. Procédé selon l'une quelconque des revendications 1 à 6, dans lequel ledit collecteur de retour inclut un interprète qui traduit lesdites préférences individuelles de contrôle d'accès et/ou de confidentialité en un format conforme au format de spécification préférentiel dudit système de gestion d'informations d'utilisateur.

8. Procédé selon l'une quelconque des revendications 1 à 7, dans lequel ledit collecteur de retour traite lesdites préférences de contrôle d'accès et/ou de confidentialité collectées de manière à extraire des règles de confidentialité pour des types de données d'information individuels gérés par ledit système de gestion d'informations d'utilisateur,
dans lequel lesdites règles de confidentialité sont analysées de telle manière que des statistiques de préférence sont générées, où lesdites statistiques de préférence sont utilisées pour en déduire ledit ensemble de règles générales pour tous les types de données.

9. Procédé selon l'une quelconque des revendications 1 à 8, dans lequel de multiples ensembles de règles générales sont déduites.

10. Procédé selon l'une quelconque des revendications 1 à 9, dans lequel ledit collecteur de retour fournit des interfaces à des utilisateurs dudit environnement de service pervasif pour afficher et/ou sélectionner ledit ensemble de règles générales.

11. Procédé selon l'une quelconque des revendications 1 à 10, dans lequel lesdites préférences de contrôle d'accès et/ou de confidentialité collectées par ledit collecteur de retour sont anonymisées.

12. Procédé selon l'une quelconque des revendications 1 à 11, dans lequel, sur la base dudit ensemble de règles générales, un utilisateur dudit environnement de service pervasif effectue des modifications spécifiques à l'utilisateur de ses propres préférences de contrôle d'accès et/ou de confidentialité, où ledit collecteur de retour prend en considération lesdites modifications spécifiques à l'utilisateur.

13. Procédé selon l'une quelconque des revendications 1 à 12, dans lequel ledit collecteur de retour notifie à des utilisateurs dudit environnement de service pervasif des mises à jour et/ou des modifications dudit ensemble de règles générales, et/ou
dans lequel un nouvel utilisateur rejoignant ledit environnement de service pervasif utilise ledit ensemble de règles générales pour le processus d'initialisation de ses propres préférences de contrôle d'accès et/ou de confidentialité, et/ou
dans lequel ledit ensemble de règles générales est recomposé périodiquement et/ou de façon guidée par les événements.

14. Système pour permettre la génération de préférences de contrôle d'accès et/ou de préférences de confidentialité pour des utilisateurs dans un environnement de service pervasif, en particulier pour l'exécution du procédé selon l'une quelconque des revendications 1 à 13, le système comprenant
la fonctionnalité de fournir au moins un service et/ou une application pervasif configurés pour requérir des éléments d'information spécifiques à l'utilisateur,
un système de gestion d'informations d'utilisateur automatisé qui est configuré pour gérer des éléments d'information personnels détenus par et/ou associés à un utilisateur,
un système de contrôle d'accès associé audit système de gestion d'informations d'utilisateur, ledit système de contrôle d'accès étant configuré pour traiter les requêtes en provenance dudit service et/ou de ladite application pervasif, et
la fonctionnalité d'inclure une population d'utilisateurs prenant part audit environnement de service pervasif,
**caractérisé en ce qu'**une entité -collecteur de retour- est prévue, ledit collecteur de retour étant configuré
pour collecter des préférences individuelles de contrôle d'accès et/ou de confidentialité à partir d'une pluralité d'utilisateurs dudit environnement de service pervasif,
pour déduire un ensemble de règles générales de préférences de contrôle d'accès et/ou de confidentialité à partir desdites préférences individuelles de contrôle d'accès et/ou de confidentialité collectées, où ledit ensemble de règles générales peut servir de préférences de confidentialité initiales d'utilisateurs qui sont nouveaux dans ledit environnement de service pervasif, et
pour fournir ledit ensemble de règles générales de préférences de contrôle d'accès et/ou de confidentialité à des utilisateurs dudit environnement de service pervasif de sorte qu'un utilisateur établi dudit environnement de service pervasif et/ou un nouvel utilisateur rejoignant ledit environnement de service pervasif adopte ledit ensemble de règles générales comme ses propres préférences de confidentialité.
